# EUROPEAN PATENT APPLICATION

(11) **EP 0 789 467 A2**
(43) Date of publication of application: **13.08.1997**
(21) Application number: 97300744.6
(22) Date of filing: 05.02.1997
(51) Int. Cl.: H04L 7/04, G06F 17/15

(54) **Method and apparatus for correlation**

(30) Priority: 08.02.1996 GB 9602566
(71) Applicant: NOKIA MOBILE PHONES LTD., 24101 Salo (FI)
(72) Inventor: Sokoler, Izydor, 1308 Köbenhavn K (DK)
(74) Representative: Haws, Helen Louise

(57) **Abstract**

A correlator for determining the current correlation between a digitized signal and a predetermined correlation word comprises a register means (2') through which discrete signals of the digitized signal are caused to pass under the control of a clock. The correlation word comprises individual correlation values (cₒ-c₅₃) arranged in a plurality of successive correlation value groups (cₒ-c₈, c₉-c₁₇, c₁₈-c₂₆, c₂₇-c₃₅, c₃₆-c₄₄, c₄₅-c₅₃). The correlation values (cₒ-c₅₃) within respective correlation value groups (cₒ-c₈, c₉-c₁₇, c₁₈-c₂₆, c₂₇-c₃₅, c₃₆-c₄₄, c₄₅-c₅₃) have the same value. The register cells (aₒ-a₅₃) of the register means are arranged in groups (aₒ-a₈, a₉-a₁₇, a₁₈-a₂₆, a₂₇-a₃₅, a₃₆-a₄₄, a₄₅-a₅₃) corresponding to the correlation value groups (cₒ-c₈, c₉-c₁₇, c₁₈-c₂₆, c₂₇-c₃₅, c₃₆-c₄₄, c₄₅-c₅₃) of the correlation word. The correlator comprises outputs from the register means (2') for outputting the contents from the register cells (aₒ, a₉, a₁₈, a₂₇, a₃₆, a₄₅ and a₅₄) which, by a clock pulse, receive signal values from a preceding register cell group (aₒ, a₉, a₁₈, a₂₇, a₃₆, a₄₅ and a₅₄), and a calculating device (7, 8, 9; 13, 15, 17, 18) in which the current correlation (11) is determined on the basis of a correlation calculated for the former clock period and corrected by a value which depends on the signal values output from the register cells (aₒ, a₉, a₁₈, a₂₇, a₃₆, a₄₅ and a₅₄) combined with predetermined weight factors associated with respective register cells (aₒ, a₉, a₁₈, a₂₇, a₃₆, a₄₅ and a₅₄) from which the signal values are output.

## Description

The invention concerns a method of determining the current correlation between a digitized signal and a predetermined correlation word as well as a correlator therefor. Finally, the invention concerns a portable telephone having such a correlator.

It is well-known to regenerate the clock frequency of a received data burst on the basis of the preamble of the data burst. According to a DECT standard determined by ETSI, the data burst comprises a preamble which contains information on the clock frequency of the data burst and a predetermined sync word, on the basis of which the start time of the successive data signal may be estimated. In the DECT system the preamble consists of sixteen data bit periods and a sync word likewise having sixteen data bit periods.

The preamble is usually affected by noise, in particular jitter, for which reason the current values of the analog signal cannot readily be used in the calculation of the correlation with a predetermined correlation word. The received GMSK-modulated signal is FM-detected and passed to a comparator in which the signal is one-bit quantized. Then the formed signal is oversampled to form a string of discrete signal values which are used in the correlation with the correlation word.

In an oversampling, e.g. with a factor of nine and with a correlation word having a length corresponding to six data bits, the correlation word contains 54 discrete data values or samples which are to be stored in respective cells in a correlation word register. According to the prior art, the oversampled and quantized signal is passed to a register having a corresponding length (54 cells), and then the correlation is determined by multiplying the cells of the registers in pairs and subsequently summing them to determine the current correlation. It will be appreciated that the calculation involves many exacting arithmetical operations. Further, the storage space requirement is quite high partly for the temporary storage of the preamble signal, partly for the storage of the correlation word.

The invention provides a method of determining the current correlation between a digitized signal and a predetermined correlation word, said correlation word comprising individual correlation values arranged in a plurality of successive correlation value groups, said correlation values within the respective correlation value groups assuming the same value, and wherein discrete signal values of the digitized signal, under the control of a clock, are caused to pass through a register means whose register cells are arranged in groups corresponding to the correlation value groups of the correlation word, wherein the digital signal values are output from the register cells which receive signal values from a preceding register cell group by a clock pulse, and wherein the current correlation is calculated by correcting a correlation, calculated for the former clock period, by a value which depends on the output signal values from the register cells combined with predetermined weight factors associated with respective register cells from which the signal values are output and a correlator for determining the current correlation between a digitized signal and a predetermined correlation word, said correlation word comprising individual correlation values arranged in a plurality of successive correlation value groups, said correlation values within respective correlation value groups assuming essentially the same value, and comprising a register means through which discrete signal values of the digitized signal are caused to pass under the control of a clock, wherein the register cells of the register means are arranged in groups corresponding to the correlation value groups of the correlation word, wherein the correlator comprises outputs from the register means for outputting the contents from the register cells which receive signal values from a preceding register cell group by a clock pulse, and a calculating device in which the current correlation is determined on the basis of a correlation calculated for the former clock period and corrected by a value which depends on the output signal values from the register cells combined with predetermined weight factors associated with respective register cells from which the signal values are output.

The invention utilizes the idea that the correlation word may be considered as a string of discrete values which may be divided into successive groups having the same discrete value. The discrete signal values of the digitized signal are caused to pass through a register under the control of a clock. The successive register cells of the register are arranged in groups corresponding to the groups of the correlation word, and the digital signal values are output from the register cells which, by a clock pulse, receive signal values from a preceding register cell group, i.e. from the first cell in each group. The output signal values are used in the calculation of a correlation change, and the current correlation is calculated by correcting a correlation, calculated from the previous clock period, by a value which depends on the output signal values combined with predetermined weight factors associated with respective register cells from which the signal values are output.

The invention provides a method which enables the current correlation to be determined on the basis of a relatively few calculating operations, and which may be used in a consumer product, such as a digital cordless telephone with a minimum of storage space.

This means in practice that with a correlation word having a length corresponding to N (e.g. 6) data bit periods in the arriving, oversampled preamble signal, it is sufficient to determine a correlation change on the basis of (N + 1) signal values and to add this change to the correlation determined for the preceding sample clock period. The number of calculating operations to determine a single, current correlation value will hereby be independent of the oversampling factor used.

The invention moreover concerns a correlator for determining the current correlation between a digitized signal and a predetermined correlation word. The correlation word may be considered as a string of discrete values which may be divided into successive groups having the same discrete value. The correlator comprises a register means through which the signal values of the digitized signal are caused to pass under the control of a clock. The register cells of the register means are arranged in groups corresponding to the correlation value groups of the correlation word and comprise outputs for outputting the contents from the register cells in the register means which, by a clock pulse, receive signal values from a preceding register cell group. An associated calculating device is used for calculating the current correlation, and this is determined on the basis of a correlation calculated for the previous clock period and corrected by a value which depends on the output signal values from the register cells combined with predetermined weight factors associated with respective cells from which the signal values are output. It is hereby possible to avoid storing the correlation word in its entirety, since it is just the difference between the values of the groups of the correlation word which is important in the calculation of the current correlation. The required number of register locations is hereby minimized, which means a drop of about 40 % in the preferred embodiment. This is of great importance since the space on the silicon chip is usually very restricted.

Finally, the invention concerns a portable telephone containing a correlator of the type defined in claims 2-9 for use in the regeneration of the clock signal for a data burst in accordance with the DECT standard according to ETSI, said regeneration being performed by means of a periodic preamble signal in the data burst. Successive values in a correlation signal may hereby be used for determining the optimum sampling time in the sampling of the digital information contained in the data burst. Within the DECT standard this information comprises the sync word and the actual data signal.

The invention will be explained more fully below in connection with preferred embodiments with reference to the drawing, in which:
fig. 1 schematically illustrates how the correlation between the discrete signal values of a signal and a preselected correlation word is defined;
fig. 2 shows an example of a noise DECT signal containing a preamble and the same signal after it has been quantized;
fig. 3 shows a preferred embodiment of a correlator of the invention;
fig. 4 shows an alternative embodiment of a correlator of the invention;
fig. 5 shows a correlation signal generated by the correlator of the invention, a quantized, noiseless sine signal being used as the arriving signal; and
fig. 6 shows a correlation signal generated by the correlator of the invention, a quantized, noise sine signal being used as the arriving signal.

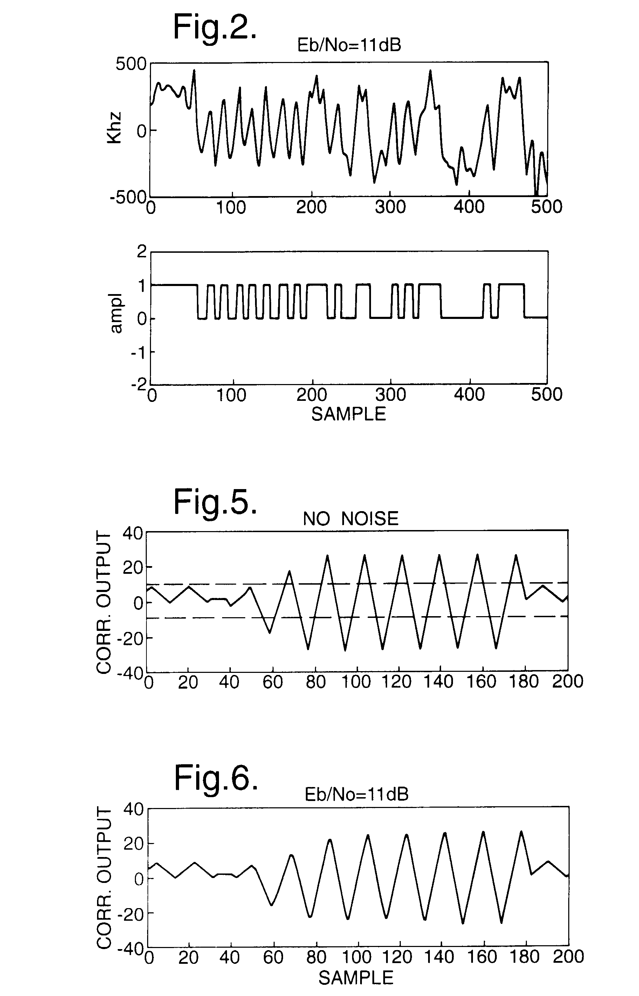

Fig. 2, at the top, shows a signal sequence which, by nature, corresponds to a typically DECT signal with Eb/No=11 dB, where Eb is signal energy per bit, while No is noise energy per Hz. DECT signals are transmitted in TDMA channels as data bursts. The data burst forwardly has a preamble by which the receiver can detect the frequency of the signal and regenerate the clock frequency of the received signal. It has been found most expedient in a one-bit quantization to perform the sampling centrally in a data bit, and, therefore, the purpose of the clock frequency regeneration is essentially to find the centre of the data bits. The preamble is followed by a sync word which is used for determining the time of arrival of the first data bit and for estimating the time of arrival of the next data burst.

It will be seen from fig. 2 at the top that the signal is frequency-modulated, the horizontal axis representing the time - here shown as the number of samples in an oversampling of the signal by a factor of nine, the vertical axis representing the frequency sweep as a function of time. The carrier wave in the DECT system is at about 1890 MHz, while the frequency sweep in the preamble with noise is within +/- 300 kHz. The preamble has a data bit rate of 1152 kbits/sec. in the DECT system. The preamble is located from sample about no. 60 to sample about no. 200 in the signal sequence shown and comprises 16 data bit periods.

The top signal shown in fig. 2 corresponds to the one supplied from the FM detector of the telephone. The signal is one-bit quantized in a comparator, as a conventional A/D converter uses too much power and is too expensive to lend itself for use in a cordless telephone.

The quantized signal is oversampled by a factor of 9 (9 samples in each data bit period), which means here that the sample frequency will be 10,368 MHz, which corresponds to the system clock of the cordless telephone.

The purpose of adjusting the receiver to the clock frequency of the transmitter is to ensure that received data are sampled precisely in the centre, it having been found that the optimum ratio of signal to noise is achieved hereby.

As the alternating data bit flow of the preamble signal is well-known under noiseless conditions, the correlation word will usually be preselected as a segment of the quantized preamble signal. The length of the correlation word is selected as compromise between the desirability of detecting the presence of the preamble signal with the greatest possible probability without simultaneously risking latching to false preamble signals, which requires correlation words as long as possible, and the desirability of e.g. being able to correct DC errors at the beginning of the reception of the preamble signal and subsequently being able to latch to the rest of the preamble signal. This usually requires a relatively short correlation word.

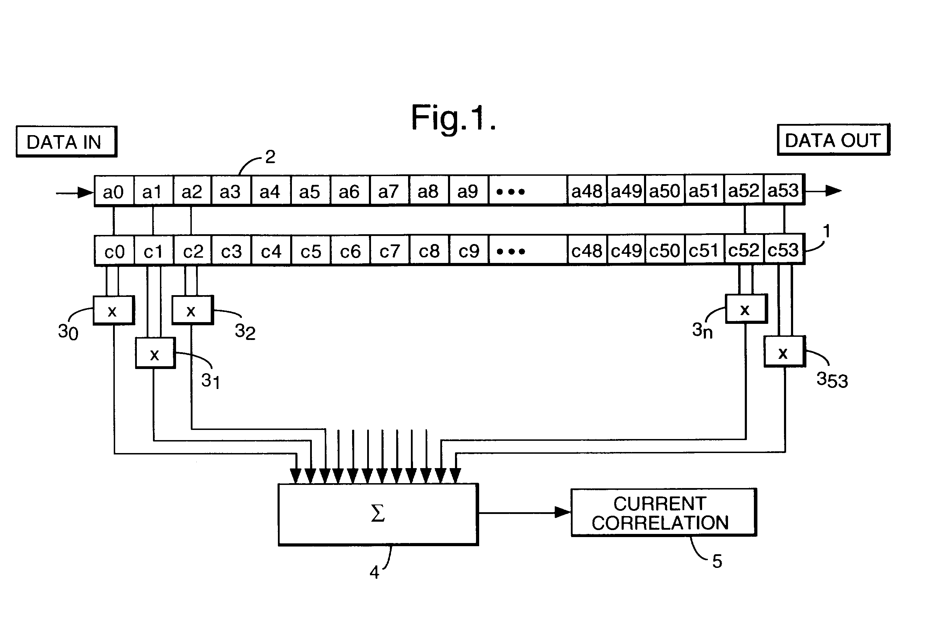

In the preferred embodiment of the invention, the length of the correlation word is selected to correspond to six data bit periods in the preamble signal. Since an oversampling factor of nine has simultaneously been selected, the correlation word will have a length of 54 bits. It is illustrated in fig. 1 how an arriving, quantized signal is correlated with the correlation word. The correlation word is stored in a register 1 having 54 register locations cₙ, while the arriving, quantized signal, under the control of the sample clock signal, is clocked into a first-in-first-out register 2 having register locations aₙ corresponding to the correlation word register 1. During each clock period, the contents of the individual register locations aₙ and cₙ are clocked out, and the contents are passed to multiplication devices 3ₙ, which are associated with respective register locations, the number of these being therefore 54. The contents of the register location aₒ are multiplied by the contents of the register location cₒ, etc. in the multiplication device 3ₒ. The 54 products calculated in the multiplication devices 3ₙ are passed to a summation device 4, in which the products are summed, and a sum result 5 may be output from the summation device 4 as a representation of the current or instantaneous correlation between the quantized signal and the correlation word.

The invention is based on the finding that a noiseless preamble signal, when quantized and oversampled with a factor S, will assume the shape of a string of bits which are grouped, so that a group in the form of a sequence of S bits with a logic state "1" is followed by a sequence of S bits having a logic state "0", which is repeated periodically. This means in the preferred embodiment that the contents of the register locations cₒ-c₈ correspond to a group with a logic state "1". This is followed by the register locations c₉-c₁₇ of the correlation word which, as a group, then assume a logic state "0". This is repeated with a period of 18, and, therefore, the contents of the register locations c₁₈-c₂₆ and c₃₆-c₄₄ of the correlation word as groups correspond to a logic state "1", while register locations c₂₇-c₃₅ and c₄₅-c₅₃ as groups assume a logic state "0".

It will be appreciated that the contents of the register locations of the correlation word may be considered as a sort of weight factor by which the individual bits of the arriving signal are weighted in the calculation of the current correlation. By dividing the register 2, through which the arriving signal is clocked, into groups in the same manner as the correlation register 1, it will be appreciated that a bit in the arriving signal just changes weight factor when it changes from one group to the next group.

If the correlation of the previous clock period is known, the current correlation may be calculated by adding a modifier value to the previous correlation. The modifier value is determined by multiplying the contents or the value of the bits changing weight factor by the weight factor modification, i.e. the new weight factor minus the old weight factor. When there are six groups having weight factors, seven bits change weight factor - viz. the five changing from one group to another and two which are received in the first group and which leave the last group, respectively. The intermediate register locations thus just serve to store and delay samples which are not used in the calculation of a modifier value in a given clock period.

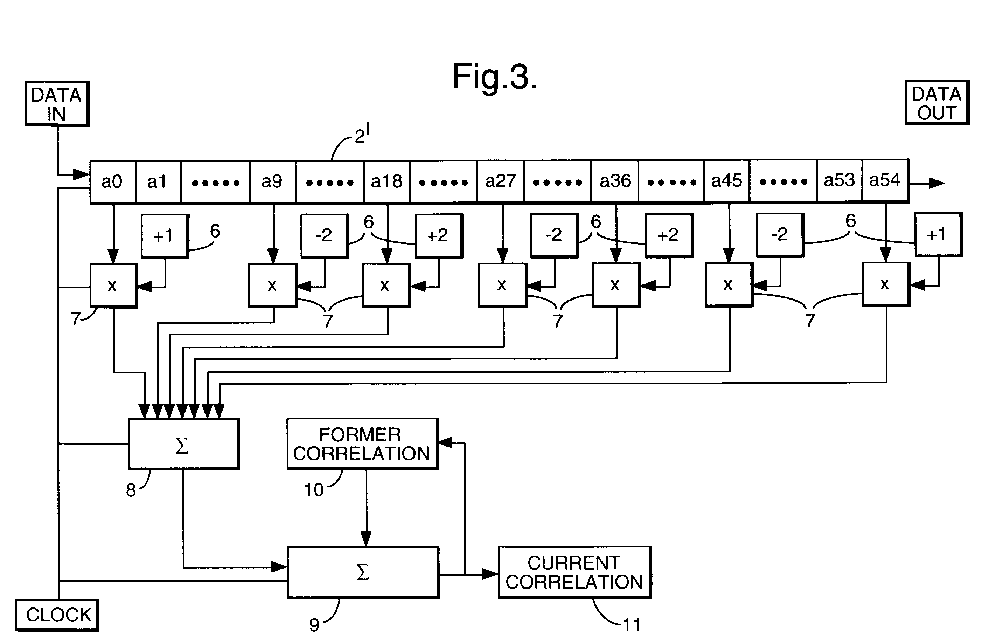

Fig. 3 shows a preferred embodiment of a correlator of the invention. The correlator comprises a register 2' which operates according to the first-in-first-out principle and corresponds to the register 2 shown in fig. 1, said register 2' having one extra register location a₅₄, the register locations then totalling 55. This extra register location receives the bit which leaves the last weight factor group, and which is included in the calculation of the correlation modifier value. The bits which changed weight factor at the last clock pulse are present on the register locations aₒ, a₉, a₁₈, a₂₇, a₃₆, a₄₅ and a₅₄. In the embodiment shown, the logic "1" is represented by the value 1, while the logic "0" is represented by the value -1. The weight factor of samples present outside the register 2' and thus the correlation word will be 0.

The weight factor of the register locations cₒ-c₈, c₁₈-c₂₆, and c₃₆-c₄₄ will be + 1, while it will be -1 for the register locations c₉-c₁₇, c₂₇-c₃₅ and c₄₅-c₅₃. The weight factor modifications are stored in seven registers 6. When the sample clock signal has moved the bit of the arriving signal one location in the register 2', the contents of the register locations aₒ, a₉, a₁₈, a₂₇, a₃₆, a₄₅ and a₅₄ are output and passed to respective multiplication devices 7, in which the register contents are multiplied by the weight factor modifications stored in the registers 6. The products from the multiplication devices 7 are passed to a summation device 8, in which the modifier value for the correlation is calculated by adding the products calculated in the multiplication devices 7 with each other.

The modifier value for the correlation is passed further on to another summation device 9, in which the modifier value for the correlation is summed with the correlation value of the former clock period. The current correlation 11 may be output from the summation device 9, and the calculated value is simultaneously stored on the former value in a register 10, from which the value may be output in the next clock period as the correlation value of the former clock period for use in the summation device 9.

The summation device 9 may be omitted, if the contents of the register 10 are instead returned directly to the summation device 8. The modifier value for the correlation will then not appear as an intermediate result.

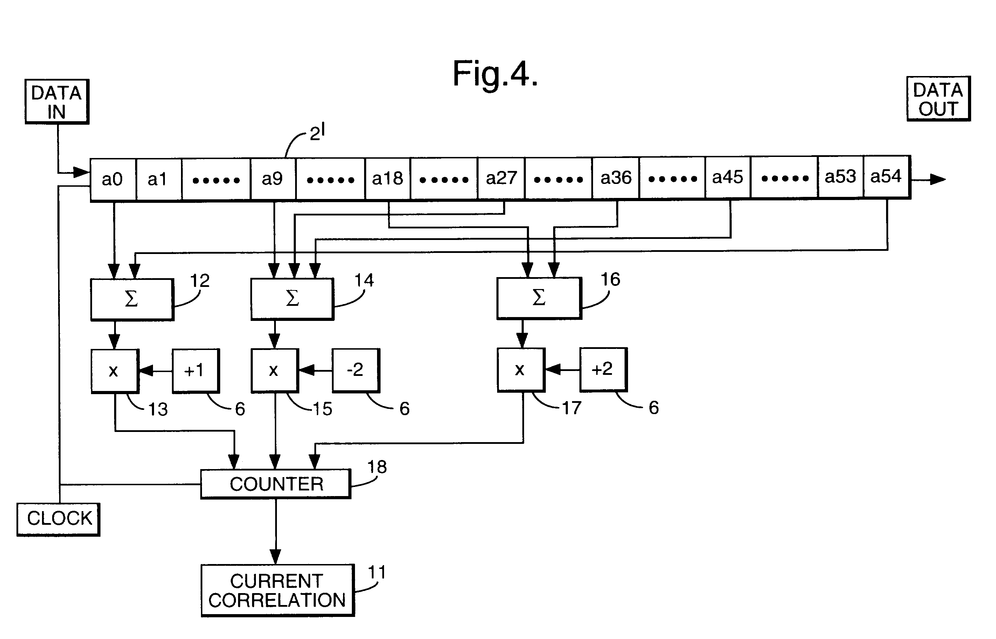

Fig. 4 shows an alternative embodiment of a correlator of the invention, and this embodiment, like the one shown in fig. 3, has a register 2' which operates according to the first-in-first-out principle, and which has one extra register location a₅₄, the number of storage locations then totalling 55. Since the correlation word is the same for the alternative embodiment, the bits changing weight factor by a clock pulse are present on the same register locations - viz. the locations aₒ, a₉, a₁₈, a₂₇, a₃₆, a₄₅ and a₅₄. This embodiment utilizes the fact that the weight factor change with which the seven bits are associated is known beforehand. Therefore, the contents of the register locations aₒ and a₅₄ are output by the sampling clock signal, and the contents are passed to a first summation device 12, from which the sum is passed to a first multiplication device 13 in which said is multiplied by the respective weight factor change stored in a register 6. Similarly, the contents of the register locations a₉, a₂₇, a ₄₅ and of the register locations a₁₈, a₃₆, respectively, are output and passed to a second and a third summation device 14, 16, respectively, from which the sum is passed to a second and a third multiplication device 15, 17, respectively, in which said sums are multiplied by the respective weight factor change stored in registers 6.

The products from the three summation devices 12, 14 and 16 are transferred to a counter 18, which contains the value of the last-calculated correlation. The three products correct the contents of the counter by the calculated correlation modifier contributions, and then the current correlation 11 is accessible on the output of the counter 18. In contrast to the last embodiment, the modifier value for the correlation will not be readily accessible as an intermediate result anywhere in the correlator, as the counter 18 here replaces the summation devices 8 and 9 in the first embodiment.

Fig. 5 shows a correlation signal generated on the basis of an optimum noiseless preamble signal which has been quantized as described above and correlated with the correlator shown in fig. 3. The correlator acts as a Fir filter having pass band properties. This results in the formation of the correlation signal shown in fig. 5, which has a rated maximum and minimum at an amplitude of +/-27. The reason is that the arrived signal is represented by the amplitude 1 for logic "1" and 0 for logic "0". If, instead, the arrived signal was represented by the amplitude 1 for logic "1" and -1 for logic "0", the amplitude time values of the correlation signal would be positioned at +/-54 (the number of bits in the correlation word). The horizontal, dotted lines indicate possible threshold values to detect a good correlation between signal and correlation word.

Fig. 6 shows a correlation signal produced by passing the signal shown in fig. 2 through the correlator shown in fig. 3. It will be seen from fig. 6 that even with a signal to noise ratio where Eb/No=11 dB, the correlation signal will have amplitude values considerably above +/-20.

The invention provides a correlator where the register 1 for containing the correlation word may be replaced by registers 6 containing weight factor modifications. If the invention is implemented as illustrated by the described embodiments, a saving as high as about 40 % of the total silicon area can be achieved over a correlator implemented as shown in fig. 1. Another quite essential advantage is that the amount of calculating operations is reduced significantly, as just quite few bits are included in the calculations. In particular, the many calculating power consuming multiplifications are avoided. Further, the two embodiments shown are unique in that the oversampling factor may be made arbitrarily great without changing the number of calculating operations per calculated correlation, since it is the number of weight factor groups in the correlation word which controls that number.

The invention may be implemented both in software and hardware. The actual implementation depends on the contemplated application of the correlator. When used in connection with cordless telephones, the invention may advantageously be implemented together with a clock regeneration module in a special chip.

The present invention includes any novel feature or combination of features disclosed herein either explicitly or any generalisation thereof irrespective of whether or not it relates to the claimed invention or mitigates any or all of the problems addressed.

In view of the foregoing description it will be evident to a person skilled in the art that various modifications may be made within the scope of the invention.

## Claims

1. A method of determining the current correlation between a digitized signal and a predetermined correlation word, said correlation word comprising individual correlation values arranged in a plurality of successive correlation value groups, said correlation values within the respective correlation value groups assuming the same value, and wherein discrete signal values of the digitized signal, under the control of a clock, are caused to pass through a register means whose register cells are arranged in groups corresponding to the correlation value groups of the correlation word, wherein the digital signal values are output from the register cells which receive signal values from a preceding register cell group by a clock pulse, and wherein the current correlation is calculated by correcting a correlation, calculated for the former clock period, by a value which depends on the output signal values from the register cells combined with predetermined weight factors associated with respective register cells from which the signal values are output.

2. A correlator for determining the current correlation between a digitized signal and a predetermined correlation word, said correlation word comprising individual correlation values arranged in a plurality of successive correlation value groups, said correlation values within respective correlation value groups assuming essentially the same value, and comprising a register means through which discrete signal values of the digitized signal are caused to pass under the control of a clock, wherein the register cells of the register means are arranged in groups corresponding to the correlation value groups of the correlation word, wherein the correlator comprises outputs from the register means for outputting the contents from the register cells which receive signal values from a preceding register cell group by a clock pulse, and a calculating device in which the current correlation is determined on the basis of a correlation calculated for the former clock period and corrected by a value which depends on the output signal values from the register cells combined with predetermined weight factors associated with respective register cells from which the signal values are output.

3. A correlator according to claim 2, wherein a storage for the associated weighting factor is provided for each output from the register means for outputting the contents from the register cells, said factor being determined as the difference between the correlation value of the correlation value group with which the register cell concerned is associated and the correlation value of the correlation value group from which the register cell concerned has just been received.

4. A correlator according to claim 3, including for each output from the register means a multiplication device for multiplying the contents from the respective register cell with the associated weighting factor.

5. A correlator according to claim 4, wherein the calculating has a compensation part to which the calculated product from each of the multiplication devices is passed for determining the current correlation by adding the sum of the calculated products to the last-calculated correlation.

6. A correlator according to claim 5, wherein the compensation part of the correlator comprises a counter whose contents represent the current correlation, and the contents of the counter are corrected after each clock pulse by adding the sum of the calculated products to the contents of the counter.

7. A correlator according to claim 5, wherein the compensation part of the correlator comprises a summation device in which the current correlation is calculated by adding the sum of the calculated products to the last-calculated correlation.

8. A correlator according to claim 7, including a storage for the compensation part of the correlator, said storage storing the last-calculated correlation.

9. A correlator according to claim 3, wherein the outputs from the register means are arranged such that the contents of register cells from outputs having the same weighting factor are summed in summation devices, and the resulting sums are passed to multiplication devices in which they are multiplied by the associated weighting factors stored in storages.

10. A portable telephone containing a correlator of the type defined in claims 2-9 for use in the regeneration of the clock signal for a data burst in accordance with the DECT standard according to ETSI, said regeneration being performed by means of a periodic preamble signal in the data burst.
